# FASCICULE DE BREVET EUROPEEN

(11) **EP 0 380 824 B1**
(45) Date de publication et mention de la délivrance du brevet: **08.06.1994**
(21) Numéro de dépôt: 89203329.1
(22) Date de dépôt: 28.12.1989
(51) Int. Cl.: C08L 77/00, C09J 4/00

(54) **Matériaux composites comprenant une couche à base de polypropylène et de polyamide**
Verbundwerkstoffe enthaltend eine Schicht auf der Basis von Polypropylen und Polyamid
Composite materials comprising a layer based on polypropylene and polyamide

(30) Priorité: 12.01.1989 FR 8900424
(43) Date de publication de la demande: 08.08.1990
(73) Titulaire: SOLVAY (Société Anonyme), B-1050 Bruxelles (BE)
(72) Inventeur: Simoens, Anthony, B-5030 Vedrin (BE)
(74) Mandataire: Husemann, Claude

(56) Documents cités:
- FR-A- 2 365 618
- FR-A- 2 504 143
- GB-A- 1 345 747
- GB-A- 2 156 364
- CHEMICAL ABSTRACTS, vol. 81, 15 juillet 1974, page 11, résumé no. 4410d,Columbus, Ohio, US; F. IDE et al.: "Properties of polypropylene-nylon blendpolymer filled with glass fiber"

## Description

La présente invention concerne des matériaux composites comprenant une couche à base de polyamide et de polypropylène. Elle concerne plus particulièrement des matériaux composites comprenant une couche présentant une combinaison améliorée de propriétés mécaniques et adhésives, et comprenant un polyamide semi-aromatique et du polypropylène dont au moins une partie est modifiée par greffage avec un monomère polaire, ainsi qu'optionnellement un agent de renforcement fibreux.

L'invention concerne également les objets façonnés à partir de ces matériaux composites.

Des compositions à base de polypropylène (dénommé ci-après PP) dont une partie est modifiée par un acide carboxylique insaturé ou un anhydride de pareil acide et contenant aussi un polyamide (dénommé ci-après PA) et des fibres de verre à titre de matériau de renforcement ont été décrites dans les brevets US-A-4404312 (TOYO BOSEKI K.K.) et GB-A-1345747 (MITSUBISHI RAYON Co). Ces compositions présentent d'intéressantes propriétés mécaniques, telles qu'une rigidité et une résistance au choc élevées.

Des compositions manifestant une synergie dans certaines propriétés physiques, telles que l'adhérence, sont connues également (brevet US-A-3804919 au nom de DART INDUSTRIES, INC). Ces compositions sont par exemple des mélanges de PP non modifié et de PP modifié par réaction d'acrylate de glycidyle en présence d'un peroxyde organique. Les PP sont renforcés par des fibres de verre (exemples).

Il n'a toutefois pas été possible jusqu'à présent de réunir, dans une seule et même composition, une combinaison satisfaisante de propriétés mécaniques et de propriétés d'adhérence.

L'invention vise à remédier à cet inconvénient et dès lors à fournir des matériaux composites comprenant une composition à base de polyamide et de polypropylène présentant, à la fois et à un degré suffisant, des propriétés mécaniques et des propriétés d'adhérence.

La présente invention concerne à cet effet des matériaux composites constitués, d'une part, d'une couche comprenant au moins un polyamide (PA) et au moins un polymère du propylène (PP) au moins partiellement modifié par un monomère comportant au moins un groupe carboxylique ou anhydride et, d'autre part d'une plaque constituée d'un autre matériau choisi parmi les polymères synthétiques organiques, les produits cellulosiques et les métaux, dans lesquelles le polymère du propylène présente un indice de fluidité (flow rate) (MFI) mesuré selon la norme ASTM D 1238-86 (conditions 230/2,16) supérieur à 20 g/10 min.

Les polyamides PA contenus dans la couche selon l'invention peuvent être choisis parmi les PA dérivés d'amines aliphatiques, alicycliques et aromatiques, d'une part, et d'acides dicarboxyliques aliphatiques, alicycliques et aromatiques, d'autre part.

Des exemples d'amines utilisables sont l'hexaméthylène diamine, la décaméthylène diamine, la dodécaméthylène diamine, les 2,2,4- et 2,4,4-triméthylhexaméthylène diamines, les 1,3 et 1,4-bis-(aminométhyl)cyclohexanes, le bis(p-aminocyclohexylméthane), la m-xylylène diamine et la p-xylylène diamine.

Des exemples d'acides utilisables sont les acides adipique, subérique, sébacique, glutarique, azélaïque, cyclohexanedicarboxylique, isophtalique et téréphtalique.

Il peut aussi s'agir de PA dérivés d'halogénures acylés ou de diesters alkylés de ces acides, d'acides aminocarboxyliques tels que les acides 6-aminocaproique, 6-aminocaprylique, 6-aminolaurique, 11-aminoundécanoïque et 12-aminododécanoïque par exemple, ou encore de lactames dérivés de ces acides, tels que le ε-caprolactame et le ω-dodécalactame par exemple.

Ces PA peuvent être dérivés de plus d'une amine ou de plus d'un acide; des mélanges de PA différents sont aussi utilisables.

Des exemples de PA particuliers utilisables sont le polyhexaméthylène adipamide (nylon 66), le polyhexaméthylène sébacamide (nylon 610), le polycapramide (nylon 6) et le polydodécanamide (nylon 12).

Des PA préférés compte tenu de leur bonne rigidité et de leur faible absorption d'humidité sont toutefois les PA obtenus par polycondensation de xylylène diamines avec des acides aliphatiques linéaires α, ω-dicarboxyliques contenant de 6 à 12 atomes de carbone et tout particulièrement les PA obtenus par réaction de condensation de m-xylylène diamine avec l'acide adipique (dénommé ci-après PAMXD6). Parmi ceux-ci, les PAMXD6 à poids moléculaire moyen tel que leur viscosité relative (mesurée sous la forme d'une solution à 10 g/l à 25 °C dans l'acide sulfurique à 96 % en poids) ne dépassant pas 4 sont préférés. Le compromis de propriétés mécaniques et d'adhérence des compositions compatibilisées est tout à fait remarquable lorsqu'elles contiennent du PAMXD6 de viscosité relative comprise entre 1 et 3.

Les polymères du propylène PP contenus dans la couche selon l'invention peuvent être n'importe quels polymères contenant au moins 50 % et, de préférence, au moins 80 % d'unités monomériques dérivées du propylène dans leur molécule. A titre d'exemples, on peut citer : les homopolymères du propylène; les copolymères statistiques du propylène et d'au moins une autre alpha-oléfine, telle que l'éthylène ou le butène, contenant au moins 80 % molaires de propylène ainsi que les copolymères dits "à blocs" comprenant des segments de chaîne à longueurs variables dont chacun consiste en un homopolymère du propylène ou en un copolymère statistique tel que décrit ci-avant.

Au moins une partie du PP entrant dans la couche selon l'invention est modifiée par un monomère polaire. La couche selon l'invention peut donc contenir du PP non modifié et du PP modifié. En général, au moins 50 % en poids du PP présent dans la couche selon l'invention est modifié par un monomère polaire, et, de préférence, au moins 80 % en poids, pour assurer une compatiblité optimale avec le PA présent d'autre part dans la couche. Pour des raisons de commodité, et parce que c'est un moyen aisé d'obtenir des PP ayant les indices de fluidité élevés caractéristiques de l'invention, on préfère encore que la totalité du PP présent dans la couche soit modifiée.

Par PP modifié au moyen de monomères polaires, on entend désigner les PP comportant, en plus des unités monomériques définies ci-avant, des unités dérivées de monomères polaires.

Les monomères polaires mis en oeuvre pour modifier le PP peuvent être n'importe quels composés organiques comprenant au moins une liaison insaturée, de préférence de type oléfinique, et au moins un groupe carboxylique éventuellement sous forme d'anhydride.

De préférence, on utilise des monomères comprenant de 3 à 12 atomes de carbone dans leur molécule. Ces monomères polaires peuvent être notamment des acides monocarboxyliques insaturés tels que les acides acrylique, méthacrylique ou chloroacrylique, ou des acides polycarboxyliques insaturés tels que les acides maléique, fumarique et itaconique, ou encore les anhydrides dérivés de ces acides tels que l'anhydride maléique. Les monomères polaires préférés sont les acides acrylique et méthacrylique et l'anhydride maléique. Les meilleurs résultats sont obtenus avec l'anhydride maléique.

La quantité de monomères polaires modifiant le PP est en général comprise entre 0,002 et 20 % en poids de PP mis en oeuvre. Habituellement, on préfère que cette quantité soit comprise entre 0,01 et 10 %, les meilleurs résultats étant obtenus entre 0,05 et 5 %.

En ce qui concerne la structure de ce PP modifié, la préférence est donnée aux copolymères greffés dans lesquels la chaîne principale (ou squelette) est de structure polyoléfinique (polypropylénique) et les chaînes latérales (ou greffons) sont dérivées de monomères polaires.

Ces copolymères greffés peuvent être fabriqués par toutes les techniques connues de greffage telles que le greffage en solution, par irradiation ou en présence d'initiateurs, et le greffage par malaxage à l'état fondu, ce dernier étant préféré. La réaction de greffage est opérée avantageusement en présence de radicaux libres pouvant être générés par toutes les techniques connues à cet effet, telles que l'irradiation ou l'ozonisation. Habituellement, on opère à température élevée (par exemple entre 180 et 270 °C) et, de préférence, en présence de composés libérant des radicaux libres sous l'action de la chaleur. Tout particulièrement, on préfère travailler en présence de composés peroxydés organiques ayant une température de décomposition supérieure à 130 °C. Des exemples de composés peroxydés utilisables sont le 2,5 diméthyl-2,5 di(tertiobutylperoxy)hexane, le 2,5 diméthyl-2,5 di(tertio butyl-peroxy) hexyne, le peroxyde de dibutyltertiaire, l'hydroperoxyde de tert-butyle, l'alpha, alpha'-di-(tertio butylperoxy)diisopropylbenzène, ainsi que le peroxyde de dicumyle. Les peroxydes précités sont généralement utilisés à raison de 0,01 g à 20 g par kg de PP mis en oeuvre. Habituellement, on utilise des quantités comprises entre 0,05 et 10 g/kg et de préférence comprises entre 0,1 et 5 g/kg.

Le rapport en poids entre les PA et les PP dans la couche selon l'invention est généralement compris entre 95/5 et 55/45, de préférence entre 90/10 et 60/40. Des rapports PA/PP particulièrement préférés sont compris entre 75/25 et 65/35.

Le MFI du PP contenu dans la couche en constitue une caractéristique essentielle. On entend désigner par l'expression "MFI du PP", l'indice de fluidité mesuré (norme ASTM D 1238-86; conditions 230/2,16) sur l'ensemble des PP à incorporer dans les compositions. Cela implique que si l'on incorpore plusieurs PP différents, par exemple une portion modifiée et une portion non modifiée, une mesure de MFI soit effectuée sur chacun des PP à incorporer; le "MFI du PP" sera alors la moyenne pondérée des différents MFI mesurés. Il convient de souligner que l'on préfère toutefois, pour des raisons de commodité, que les MFI des PP à incorporer dans la couche ne diffèrent pas entre eux de plus de dix unités.

Ce MFI doit être supérieur à 20 g/10 min.; de préférence, il est supérieur à 50 g/10 min. La valeur supérieure du MFI n'est limitée que par la possibilité pratique de l'incorporer correctement dans la composition de la couche. Cette valeur peut être déterminée sans expérimentation excessive par l'homme du métier pour chaque composition particulière.

Le meilleur compromis de propriétés mécaniques et de propriétés d'adhérence est atteint lorsque le MFI du PP tel que 50 g/min < MFI du PP < 100 g/10 min, tout particulièrement lorsque ce MFI est tel que 70 g/10 min ≦ MFI du PP ≦ 80 g/10 min.

La couche selon l'invention peut encore contenir un ou plusieurs ingrédients supplémentaires parmi ceux décrits ci-après.

Elle peut contenir un agent de renforcement fibreux tel que, par exemple, des fibres de verre, des fibres de carbone, des fibres de carbures ou de borures métalliques, des whiskers, etc. Un agent de renforcement fibreux préféré est constitué par les fibres de verre, éventuellement traitées par des agents de couplage conventionnels. A titre de pareils agents on peut citer les silanes.

Lorsqu'un agent de renforcement fibreux est incorporé dans la couche, il peut constituer de 10 à 80 % du poids total de sa composition, et de préférence de 20 à 70 % en poids. Les meilleurs résultats sont enregistrés lorsque l'agent de renforcement fibreux constitue de 35 à 65 % du poids total de la composition de la couche.

Outre le PA, le PP au moins partiellement modifié et l'éventuel agent de renforcement fibreux, la couche peut encore contenir des additifs conventionnels choisis parmi ceux énumérés à titre non limitatif ci-après :
- des charges inorganiques;
- des ignifugeants;
- des agents antistatiques;
- des colorants;
- des pigments;
- des agents de démoulage;
etc.

La couche peut aussi contenir des agents de nucléation conventionnels du PA constitutif, tels que du talc, des phosphinates de métaux alcalins et alcalino-terreux; lorsque le PA contenu dans la composition est le PAMXD6, un agent de nucléation bien connu est le polyhexaméthylène adipamide (nylon 66).

Celle-ci peut enfin contenir des stabilisants (à la chaleur, à la lumière, antioxydants ...) conventionnels du PP et du PA.

La couche peut être préparée selon toutes les techniques connues assurant un mélange intime de ses constituants. Ainsi, on peut mélanger le PA, le PP, l'éventuel agent de renforcement fibreux et les autres éventuels additifs à sec, puis les malaxer au fondu. Pour réaliser le mélange à sec, on peut utiliser n'importe quel mélangeur, tels les mélangeurs à ruban, les mélangeurs à tambour, les mélangeurs rapides commercialisés par les firmes HENSCHEL, LOEDIGE, DYOSNA, etc. Pour réaliser le malaxage au fondu, on peut travailler indifféremment en malaxeurs du type externe, ou en malaxeurs du type interne, tels que ceux commercialisés par les firmes TROESTER, BANBURY, etc. Pour des raisons techniques et économiques, on préfère cependant travailler dans des malaxeurs du type interne et plus particulièrement dans des extrudeuses qui constituent une classe particulière de malaxeurs internes. Ces extrudeuses peuvent être des extrudeuses monovis ou des extrudeuses à vis jumelles. Le malaxage au fondu est généralement effectué entre 200 et 320 °C, de préférence entre 240 et 280 °C, pendant des durées comprises entre 5 secondes et 30 minutes, de préférence entre 30 secondes et 15 minutes.

En variante au procédé décrit ci-dessus, l'éventuel agent de renforcement fibreux peut être ajouté par exemple au mélange préalablement malaxé et fondu de PA et de PP et le malaxage au fondu poursuivi en présence de l'agent de renforcement.

La composition constituant la couche peut être mise en oeuvre en général sous forme de poudre ou sous forme de granules selon toutes les méthodes conventionnelles connues : par moulage par injection, par extrusion, par pressage, etc.

Outre la couche décrite plus haut, les matériaux composites de l'invention comprennent également une plaque constituée d'un autre matériau, susceptible de conduire à des matériaux composites cohérents et mécaniquement résistants avec ces compositions. Cet autre matériau est généralement choisi parmi les polymères synthétiques organiques, les produits cellulosiques, tels que le papier, le carton, etc. et les métaux.

De préférence, cet autre matériau est choisi parmi les polymères synthétiques organiques, plus particulièrement les polymères pouvant être façonnés par les techniques de mise en oeuvre des polymères thermoplastiques. Ces polymères peuvent contenir à titre optionnel tous les autres additifs conventionnels déjà énumérés en rapport avec les compositions compatibilisées.

Ces polymères synthétiques organiques peuvent être des polymères thermoplastiques conventionnels tels que les polymères et copolymères du chlorure de vinyle, les polymères et copolymères du styrène, et les polymères et copolymères d'alpha-mono-oléfines telles que l'éthylène et le propylène.

Ces polymères synthétiques organiques peuvent être aussi choisis parmi les polymères dénommés "élastomères thermoplastiques", c'est-à-dire les matériaux polymériques de type hétérophasique formés par une matrice caoutchouteuse dans laquelle se trouvent des plages rigides.

A la température ambiante, ces plages rigides remplacent les ponts de vulcanisation qui fournissent les propriétés élastiques dans les élastomères classiques, et à température élevée (c'est-à-dire au delà de la température de fusion de la phase cristalline) leur disparition permet une rhéologie thermoplastique normale, permettant dès lors de mettre ces matériaux en oeuvre selon les techniques classiques propres des polymères thermoplastiques (extrusion, injection, etc.) beaucoup plus simples et rapides que les techniques par vulcanisation.

Les élastomères thermoplastiques utilisables pour la réalisation des matériaux composites de l'invention peuvent être choisis parmi
- les copolymères séquencés renfermant des segments rigides de polyuréthanes et des segments flexibles formés par des chaînes polyéthers ou par des polyesters terminés par des groupes oxhydryle; à titre d'exemples de ces copolymères, on peut citer les produits Desmopan® de BAYER et Estane® de GOODRICH;
- les copolymères styréniques à séquences rigides de polystyrène interrompues par des séquences souples de polybutadiène, de polyisoprène ou d'élastomère éthylène-propylène; à titre d'exemples de ces copolymères, on peut citer les produits Kraton® et Cariflex® de SHELL et les produits Solprène® de PHILLIPS PETROLEUM;
- les copolymères séquencés renfermant des segments rigides de polyesters aromatiques et des segments flexibles constitués par des polyéthers terminés par des fonctions alcools; à titre d'exemples de ces copolymères, on peut citer les produits Hytrel® de DU PONT;
- les élastomères thermoplastiques oléfiniques (dénommés ci-après ETO) qui sont des mélanges mécaniques de polyoléfines cristallines telles que le polyéthylène et le polypropylène et d'élastomères oléfiniques tels que des co- et terpolymères élastomériques de l'éthylène, du propylène et d'un éventuel diène, comme le 1,4-hexadiène, ces élastomères étant éventuellement partiellement réticulés; à titre d'exemples de ces ETO, on peut citer les produits TPR® d'UNIROYAL, Telcar® de GOODRICH, Nordel® TP de DU PONT, Dutral® TP de MONTEDISON et Santoprène® de MONSANTO;
- les élastomères ionomériques tels que par exemple les élastomères oléfiniques insaturés sulfonés et neutralisés, appelés "thionic polymers" par la société EXXON.

Parmi tous les polymères organiques synthétiques énumérés ci-dessus, on préfère réaliser les matériaux composites avec ceux contenant des unités dérivées du propylène, en particulier avec les homopolymères et les copolymères thermoplastiques du propylène ainsi qu'avec les ETO contenant environ 25 à environ 50 % en poids de polypropylène cristallin, ces derniers permettant d'obtenir très aisément des matériaux composites aux propriétés remarquables.

Les matériaux composites de l'invention peuvent contenir la couche décrite plus haut et l'autre matériau dans des proportions quelconques. En général, la couche et l'autre matériau sont présents dans les matériaux composites de l'invention dans des rapports en poids compris entre 5/95 et 95/5, de préférence entre 20/80 et 80/20.

La couche et l'autre matériau peuvent, pour réaliser les matériaux composites de l'invention, être rendus solidaires par n'importe quelle méthode conventionnelle. En particulier, ceux-ci peuvent être rendus solidaires par pressage, par coinjection, par surinjection de l'un sur l'autre, par coextrusion, etc. Ces matériaux composites peuvent, par les mêmes méthodes, être façonnés en objets tels que des pièces injectées, des pièces extrudées, des profilés, des joints à propriétés élastomériques, des produits à propriétés "barrière" (grâce à la présence du PA), etc.

Les exemples qui suivent servent à illustrer l'invention.

### Exemple 1

On prépare une composition en mélangeant à sec entre eux les constituants suivants dans les proportions indiquées :
27,8 parties en poids de PAMXD6 de viscosité relative (mesurée sous la forme d'une solution à 10 g/l à 25 °C dans l'acide sulfurique à 96 % en poids) s'élevant à 2,1
3,0 parties en poids de nylon 66;
0,6 partie en poids de talc;
0,1 partie en poids de stéarate de baryum (lubrifiant);
55 parties en poids de fibres de verre (FV) commercialisées par la société OWENS CORNING sous la dénomination CS R 17 BX 1;
13,5 parties en poids de PP modifié par greffage d'1 % en poids d'anhydride maléique et dont le MFI s'élève à 70 g/10 min.

Des éprouvettes sont injectées à partir de la composition ci-dessus pour en déterminer la résistance en traction selon la norme ASTM D 638 et la résilience selon la norme ASTM D 256. Ces déterminations donnent les résultats ci-après :
test de résistance en traction :

| | |
|---|---|
| - tension | 158,3 MPa |
| - module | 16,37 GPa |
| test de résilience | 79,1 J/m |

La composition décrite ci-dessus est injectée sous forme d'une plaque (a). D'autre part, un élastomère thermoplastique oléfinique commercialisé par la société MONSANTO sous la dénomination Santoprène 121-73 - S 108 est également transformé en plaque (b) pressée à 180 °C sur une presse Lafarge (modèle de 30 tonnes) sous une pression de 4 MPa pendant 1 minute.

La plaque (a) (longueur : 125 mm; largeur : 125 mm; épaisseur 2 mm) et la plaque (b) (longueur : 200 mm; largeur : 110 mm; épaisseur : 2 mm) sont pressées sur la même presse à 220 °C sous une pression de 3 MPa pendant 1 minute.

Le matériau composite résultant de l'association des plaques (a) et (b) est découpé en éprouvettes de 200 mm de longueur et de 25 mm de largeur. La surface de contact représente donc un rectangle de 125 x 25 mm. Les éprouvettes sont maintenues 24 heures à température ambiante. Un test d'adhérence est effectué suivant la norme BS (British Standard) 5350, part. C 11 sur ces éprouvettes avec une vitesse de traction de 100 mm/min jusqu'à rupture par décollage des parties en contact.

Les résultats de ce test sont mentionnés ci-après (moyenne de 3 mesures) :
force d'adhérence (N) : 29,3
force d'adhérence par unité de longueur (N/m) : 1171

### Exemples 2, 3 et 4R

(Les exemples 2 et 3 illustrent l'invention; l'exemple 4R est fourni à titre de comparaison).

On prépare des compositions compatibilisées en mélangeant à sec entre eux les mêmes constituants qu'à l'exemple 1 sauf que le PAMXD6 utilisé présente une viscosité relative de 3,5
En outre :
. dans l'exemple 2, le PP modifié est le même que celui utilisé à l'exemple 1;
. dans l'exemple 3, le PP modifié contient 1 % d'anhydride maléique et présente un MFI de 25 g/10 min.;
. dans l'exemple 4R (de comparaison), le PP modifié contient 1 % d'anhydride maléique et présente un MFI de 9 g/10 min.

Le Tableau ci-après mentionne les quantités des divers constituants mis en oeuvre pour préparer les compositions de ces exemples, les propriétés mécaniques de ces compositions mesurées comme indiqué à l'exemple 1 et les résultats du test d'adhérence effectué comme décrit à l'exemple 1.

**Tableau**

| Exemples | 2 | 3 | 4R |
|---|---|---|---|
| Nature et quantité (parties en poids) des constituants mis en oeuvre : | | | |
| PAMXD6 | 30,2 | 28,9 | 30,2 |
| Nylon 66 | 3,9 | 5,0 | 3,9 |
| Talc | 0,8 | 1,0 | 0,8 |
| Stéarate de baryum | 0,1 | 0,1 | 0,1 |
| FV | 50 | 50 | 50 |
| PP modifié | 15 | 15 | 15 |
| MFI du PP modifié (g/10 min.) | 70 | 25 | 9 |

| Propriétés mécaniques : | | | |
|---|---|---|---|
| 1. Résistance en traction | | | |
| - tension (MPa) | 158,5 | | 113,5 |
| - module (GPa) | 17,01 | | 16,42 |
| 2. Résilience (J/m) | 101 | | 75 |

| Test d'adhérence : | | | |
|---|---|---|---|
| Force d'adhérence (N) | 19,9 | 12,7 | 5,5 |
| Force d'adhérence par unité de longueur (N/m) | 795 | 510 | 219 |

Les résultats rassemblés dans ce tableau montrent que, toutes autres conditions restant similaires, les compositions contenant un PP de MFI élevé selon l'invention présentent un compromis supérieur des propriétés mécaniques et des propriétés d'adhérence.

### Exemple 5R

Cet exemple est donné à titre de comparaison.

On prépare une composition comme décrit aux exemples 2 à 4R, mais sans incorporer du PP modifié.

Une plaque, injectée à partir de cette composition, est pressée sur une plaque du produit Santoprène, comme indiqué à l'exemple 1, et le matériau composite résultant soumis à un test d'adhérence. La force d'adhérence mesurée est nulle.

## Revendications

1. Matériaux composites constitués d'une part d'une couche comprenant au moins un polyamide et au moins un polymère du propylène au moins partiellement modifié par un monomère comportant au moins un groupe carboxylique ou anhydride, et d'autre part d'une plaque constituée d'un autre matériau, choisi parmi les polymères synthétiques organiques, les produits cellulosiques et les métaux, caractérisés en ce que le polymère du propylène présente un indice de fluidité (MFI) mesuré selon la norme ASTM D 1238-86 (conditions 230/2,16) supérieur à 20 g/10 min.

2. Matériaux composites selon la revendication 1, caractérisés en ce que l'autre matériau est un polymère synthétique organique thermoplastique.

3. Matériaux composites selon la revendication 1 ou 2, caractérisés en ce que l'autre matériau est un élastomère thermoplastique oléfinique.

4. Matériaux composites selon l'une quelconque des revendications 1 à 3, caractérisés en ce que le polyamide est obtenu par réaction de polycondensation de xylylène diamine avec un acide aliphatique linéaire alpha, oméga dicarboxylique contenant de 6 à 12 atomes de carbone.

5. Matériaux composites selon l'une quelconque des revendications 1 à 4, caractérisés en ce que le polymère du propylène est un polymère contenant au moins 80 % d'unités monomériques dérivées du propylène.

6. Matériaux composites selon l'une quelconque des revendications 1 à 5, caractérisés en ce que le polymère du propylène modifié est un copolymère greffé d'anhydride maléique.

7. Matériaux composites selon l'une quelconque des revendications 1 à 6, caractérisés en ce que le rapport en poids entre les polyamides et les polymères du propylène qu'ils contiennent est compris entre 90 à 10 et 60 à 40.

8. Matériaux composites selon l'une quelconque des revendications 1 à 7, caractérisés en ce que le MFI du polymère du propylène est supérieur à 50 g/10 min.

9. Matériaux composites selon l'une quelconque des revendications 1 à 8, caractérisés en ce que les compositions contiennent en outre un agent de renforcement fibreux.

10. Matériaux composites selon la revendication 9, caractérisés en ce que l'agent de renforcement est constitué par des fibres de verre incorporées à raison de 10 à 80 % en poids par rapport au poids total des compositions.

11. Objets façonnés à partir des matériaux composites des revendications 1 à 10.

## Claims

1. Composite materials consisting, on the one hand, of a layer comprising at least one polyamide and at least one propylene polymer which is at least partially modified by a monomer containing at least one carboxylic or anhydride group and, on the other hand, of a plate consisting of another material, chosen from organic synthetic polymers, cellulosic products and metals, characterized in that the propylene polymer has a melt flow index (MFI) measured according to ASTM standard D 1238-86 (230/2.16 conditions) higher than 20 g/10 min.

2. Composite materials according to Claim 1, characterized in that the other material is a thermoplastic organic synthetic polymer.

3. Composite materials according to Claim 1 or 2, characterized in that the other material is an olefinic thermoplastic elastomer.

4. Composite materials according to any one of Claims 1 to 3, characterized in that the polyamide is obtained by a polycondensation reaction of xylylene-diamine with an alpha,omega-dicarboxylic linear aliphatic acid containing from 6 to 12 carbon atoms.

5. Composite materials according to any one of Claims 1 to 4, characterized in that the propylene polymer is a polymer containing at least 80 % of propylene-derived monomer units.

6. Composite materials according to any one of Claims 1 to 5, characterized in that the modified propylene polymer is a maleic anhydride graft copolymer.

7. Composite materials according to any one of Claims 1 to 6, characterized in that the weight ratio of the polyamides to the propylene polymers which they contain is between 90 to 10 and 60 to 40.

8. Composite materials according to any one of Claims 1 to 7, characterized in that the MFI of the propylene polymer is higher than 50 g/10 min.

9. Composite materials according to any one of Claims 1 to 8, characterized in that the compositions additionally contain a fibrous reinforcing agent.

10. Composite materials according to Claim 9, characterized in that the reinforcing agent consists of glass fibres incorporated in a proportion of 10 to 80 % by weight relative to the total weight of the compositions.

11. Objects manufactured from the composite materials of Claims 1 to 10.

## Patentansprüche

1. Verbundwerkstoffe, die einerseits aus einer Schicht bestehen, die wenigstens ein Polyamid und wenigstens ein Propylenpolymer enthält, welches wenigstens teilweise durch ein Monomer, das wenigstens eine Carboxyl- oder Anhydridgruppe enthält, modifiziert ist, und andererseits aus einem Belag aus einem anderen Material, welches ausgewählt ist aus den synthetischen organischen Polymeren, den Celluloseprodukten und den Metallen, dadurch gekennzeichnet, daß das Propylenpolymer eine Fluiditätszahl (MFI), gemessen gemaß der Norm ASTM D 1238-86 (Bedingungen 230/2,16), größer als 20 g/10 min aufweist.

2. Verbundwerkstoffe gemäß Anspruch 1, dadurch gekennzeichnet, daß das andere Material ein synthetisches organisches thermoplastisches Polymer ist.

3. Verbundwerkstoffe gemäß Anspruch 1 oder 2, dadurch gekennzeichnet, daß das andere Material ein thermoplastisches olefinisches Elastomer ist.

4. Verbundwerkstoffe gemäß einem der Ansprüche 1 bis 3, dadurch gekennzeichnet, daß das Polyamid durch Polykondensationsreaktion von Xylylendiamin mit einer aliphatischen linearen α,ω-Dicarbonsäure, die 6 bis 12 Kohlenstoffatome enthält, erhalten wird.

5. Verbundwerkstoffe gemäß einem der Ansprüche 1 bis 4, dadurch gekennzeichnet, daß das Propylenpolymer ein Polymer ist, das wenigstens 80% von Propylen abgeleitete Monomereinheiten enthält.

6. Verbundwerkstoffe gemäß einem der Ansprüche 1 bis 5, dadurch gekennzeichnet, daß das modifizierte Propylenpolymer ein Pfropfcopolymer von Maleinsäureanhydrid ist.

7. Verbundwerkstoffe gemäß einem der Ansprüche 1 bis 6, dadurch gekennzeichnet, daß das Gewichtsverhältnis zwischen den Polyamiden und den Propylenpolymeren, welches sie enthalten, zwischen 90 zu 10 und 60 zu 40 liegt.

8. Verbundwerkstoffe gemäß einem der Ansprüche 1 bis 7, dadurch gekennzeichnet, daß die MFI des Propylenpolymers größer ist als 50 g/10 min.

9. Verbundwerkstoffe gemäß einem der Ansprüche 1 bis 8, dadurch gekennzeichnet, daß die Zusammensetzungen außerdem ein faserförmiges Verstärkungsmittel enthalten.

10. Verbundwerkstoffe gemäß Anspruch 9, dadurch gekennzeichnet, daß das Verstärkungsmittel aus Glasfasern besteht, eingelagert zu 10 bis 80 Gew.-% bezogen auf das Gesamtgewicht der Zusammensetzungen.

11. Objekte, die aus Verbundwerkstoffen der Ansprüche 1 bis 10 hergestellt sind.
